# EUROPÄISCHE PATENTSCHRIFT

(11) **EP 0 581 178 B1**
(45) Veröffentlichungstag und Bekanntmachung des Hinweises auf die Patenterteilung: **02.04.1997**
(21) Anmeldenummer: 93111639.6
(22) Anmeldetag: 21.07.1993
(51) Int. Cl.: B01D 27/08, B01D 35/30

(54) **Filterdeckeleinrichtung in Modulbauweise**
Filter cap installation in modular construction
Installation de couvercles de filtres à construction modulaire

(30) Priorität: 30.07.1992 DE 4225150
(43) Veröffentlichungstag der Anmeldung: 02.02.1994
(73) Patentinhaber: ROBERT BOSCH GMBH, 70442 Stuttgart (DE)
(72) Erfinder: Straubel, Max, Dr. Dipl.-Ing., D-70329 Stuttgart (DE); Lucas, Bernhard, Dipl.-Ing., E-28034 Madrid (ES); Projahn, Ulrich, Dr. Dipl.-Ing., E-28109 Alcobendas Madrid (ES); Scholz, Erich Vers.-Techn., D-73765 Neuhausen (DE)

(56) Entgegenhaltungen:
- DE-A- 2 845 519
- DE-A- 3 327 437
- DE-A- 3 412 199
- DE-A- 4 009 224

## Beschreibung

### Stand der Technik

Die Erfindung geht aus von einer Filterdeckeleinrichtung in Modulbauweise nach der im Oberbegriff des Anspruchs 1 näher angegebenen Gattung.

Solche gattungsgemäßen Filterdeckeleinrichtungen in Modulbauweise sind schon bekannt, zum Beispiel aus der DE-AS 20 36 230, DE-OS 22 11 838. Bei diesen Filterdeckeleinrichtungen ist der Gehäusemodul, an dessen Montagefläche das Flüssigkeitsfilter montiert ist, als quaderförmiger Grundkörper ausgebildet. Zwei entgegengesetzt liegende Stirnseiten des quaderförmigen Grundkörpers sind zum Anflanschen zusätzlicher Hilfsmodule geeignet, so daß verschiedene Funktionen baukastenmäßig zusammengesetzt werden können. Bei diesem Gehäusemodul liegt nun der Zulauf und der Ablauf in einer gemeinsamen Flanschfläche, die parallel zur Längsachse des Flüssigkeitsfilters verläuft. An der anderen Flanschfläche ist ein Hilfsmodul mit der Zusatzfunktion angebaut. Bei dieser Filterdeckeleinrichtung in Modulbauweise ist nun von Nachteil, daß die verschiedenen Module in einer Achse liegen, die quer zur Längsachse des Flüssigkeitsfilters verläuft. Eine begrenzte Flexibilität des Systems kann hier nur durch hohen Raumaufwand erreicht werden. Ferner ist diese Modulbauweise an ein Verkettungssystem für rohrleitungsfreie Bauweise gebunden, zudem relativ kostspielig und eignet sich kaum für einen Handpumpen-Modul, da Fluid hier durch das Filter gesaugt werden müßte.

Ferner ist aus der DE 36 06 953 A1 eine modulare Aufbereitungsvorrichtung für Druckluft bekannt, bei der die einzelnen Funktionsgruppen modular ausgebildet, beliebig aneinanderreihbar und mittels halbkonusförmigen Bereichen aneinanderpressbar sind. Auch hier sind die einzelnen Module als würfelförmige Grundkörper ausgebildet, die in einer Längsrichtung aneinandergekettet werden, während die für die Zusatzfunktionen notwendigen Geräte in quer dazu verlaufenden Richtungen angeordnet werden. Auch diese Bauweise führt zu einer teuren und aufwendigen Lösung, die vor allem einen hohen Raumbedarf erfordert und sich daher für viele Einsatzfälle nicht eignet.

### Vorteile der Erfindung

Die erfindungsgemäße Filterdeckeleinrichtung in Modulbauweise mit den kennzeichnenden Merkmalen des Hauptanspruchs hat demgegenüber den Vorteil, daß sie eine relativ einfache und kostengünstige Bauweise ermöglicht, die durch ihre äußerst kompakte Form hohe Anforderungen an Flexibilität erfüllen kann. Dabei können die verschiedenen Module koaxial zur Längsachse des Flüssigkeitsfilters angeordnet werden, was eine raumsparende Bauweise begünstigt und vielseitige Einsatzmöglichkeiten eröffnet. Die einzelnen Module sind leicht aneinander montierbar. Ferner lassen sich verschiedene Funktionen einzeln oder auch in beliebiger Kombination realisieren, insbesondere lassen sich die Funktionen von Handpumpe und Heizung kombinieren. Dabei ist es besonders vorteilhaft, wenn an dem Gehäusemodul die Befestigungsmittel zum Befestigen der Filterdeckeleinrichtung im Fahrzeug angeordnet sind und wenn die verschiedenen Hilfsmodule für die Funktionen Abschlußdeckel, Handpumpe, Kraftstoffrückführung und Heizung ausgebildet werden.

Durch die in den Unteransprüchen aufgeführten Maßnahmen sind vorteilhafte Weiterbildungen und Verbesserungen der im Hauptanspruch angegebenen Filterdeckeleinrichtung in Modulbauweise möglich. Äußerst vorteilhaft ist es, wenn gemäß Anspruch 6 ein Hilfsmodul als Zwischenmodul ausgebildet wird, wie dies besonders bei einer Heizeinrichtung nach Anspruch 10 der Fall ist.

### Zeichnung

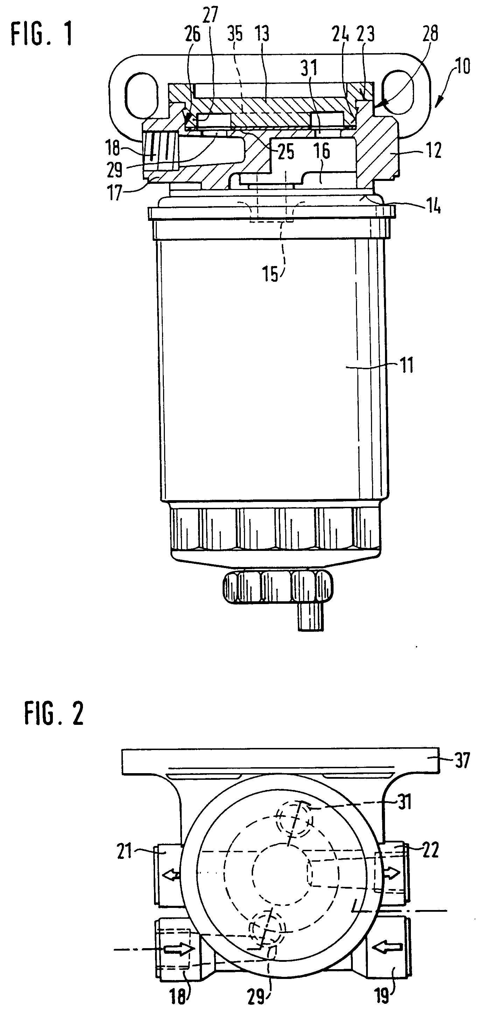

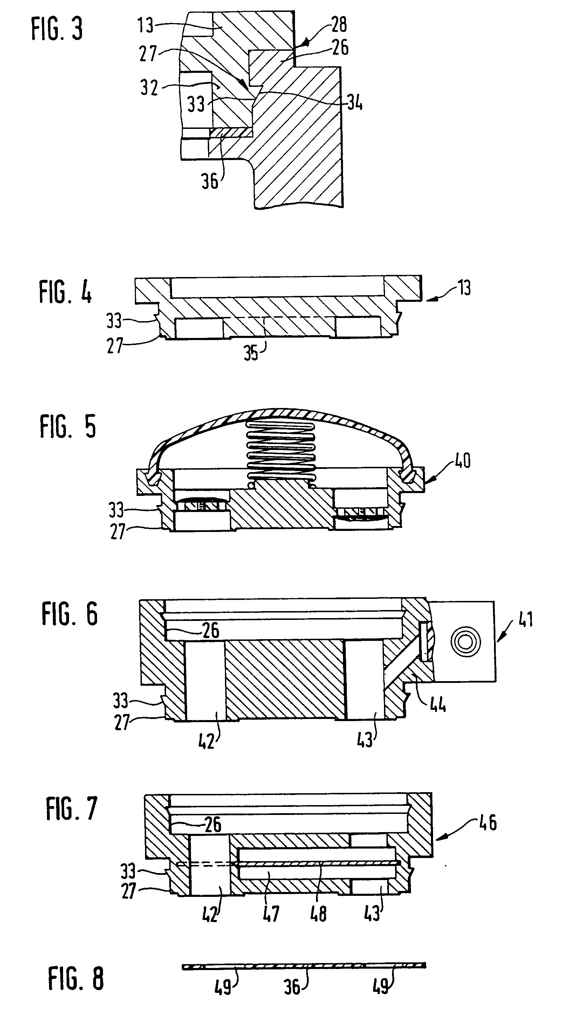

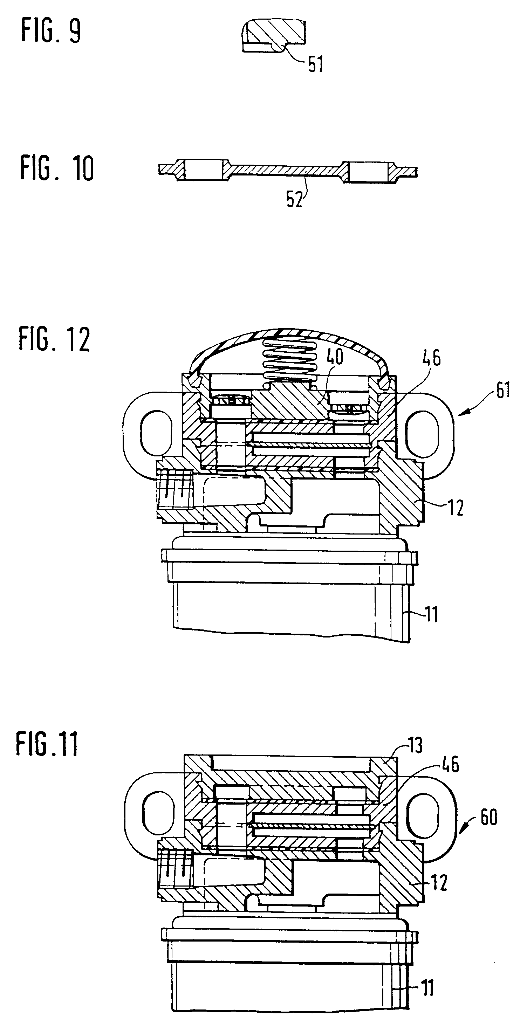

Drei Ausführungsbeispiele der Erfindung sind in der Zeichnung dargestellt und in der nachfolgenden Beschreibung näher erläutert. Es zeigen Figur 1 ein erstes Ausführungsbeispiel einer Filterdeckeleinrichtung in Modulbauweise und mit angebautem Flüssigkeitsfilter in vereinfachter Darstellung und teilweise im Schnitt, Figur 2 eine Draufsicht auf die Filterdeckeleinrichtung nach Figur 1, Figur 3 als Einzelheit die Schnappverbindung zwischen den beiden Modulbausteinen, die Figuren 4 bis 7 jeweils einen Längsschnitt durch verschiedene Hilfsmodule in vereinfachter Darstellung, wobei die Figur 4 als ersten Hilfsmodul einen Abschlußdeckel, die Figur 5 als zweiten Hilfsmodul eine Handpumpe, die Figur 6 als dritten Hilfsmodul eine Kraftstoffrückführung und die Figur 7 einen vierten Hilfsmodul als elektrische Heizung zeigen. Die Figuren 8, 9 und 10 zeigen Dichtmittel zum Abdichten zwischen den Modulbausteinen, und die Figuren 11 und 12 jeweils einen Längsschnitt durch eine zweite bzw. dritte Filterdeckeleinrichtung in Modulbauweise in vereinfachter Darstellung.

### Beschreibung der Ausführungsbeispiele

Die Figur 1 zeigt eine erste Filterdeckeleinrichtung 10 in Modulbauweise im Schnitt, an die ein Flüssigkeitsfilter 11 angebaut ist. Die Filterdeckeleinrichtung 10 besteht im wesentlichen aus einem Gehäusemodul 12 und einem daran angebauten ersten Hilfsmodul 13, der als Abschlußdeckel ausgebildet ist.

Der Gehäusemodul 12 weist zum Anbau des Flüssigkeitsfilters 11 an seiner Unterseite eine Montagefläche 14 auf, in der zum fluidischen Anschließen des Filters ein Paar von ersten Öffnungen 15, 16 angeordnet sind, die in an sich bekannter Weise gegeneinander abgedichtet sind. Das Flüssigkeitsfilter 11 kann hier als anschraubbares Wechselfilter ausgebildet werden oder auch als Filtergehäuse mit wechselbarem Filtereinsatz. Der Gehäusemodul 12 weist im wesentlichen die Grundform einer kreisringförmigen Scheibe 17 auf, deren Durchmesser ein mehrfaches ihrer axialen Dicke beträgt. Am Außenumfang dieser Ringscheibe 17 sind vier Anschlußstutzen 18, 19, 21 und 22 ausgebildet, die alle in der gleichen radialen Ebene liegen. Wie die Figur 1 in Verbindung mit Figur 2 näher zeigt, in welcher die Filterdeckeleinrichtung 10 als Draufsicht dargestellt ist, sind die Anschlußstutzen 19 und 21 nicht benutzte Blindstutzen, während der Anschlußstutzen 18 als Zulauf und der Anschlußstutzen 22 als Ablauf dienen.

Der Gehäusemodul 12 weist auf seiner zur Montagefläche 14 entgegengesetzt liegenden Stirnseite eine Anbaufläche 23 auf, an welcher der Hilfsmodul 13 dicht und fest angebaut ist. Zu diesem Zweck ist in der Anbaufläche 23 eine zylindrische und zentral liegende Aufnahmebohrung 24 vorgesehen, welche eine ebene Grundfläche 25 aufweist. Diese Aufnahmebohrung 24 bildet in dem Gehäusemodul 12 einen Buchsenanschluß 26, in welchen der Hilfsmodul 13 mit einem Steckeranschluß 27 einsteckbar ist. Der Buchsenanschluß 26 am Gehäusemodul 12 sowie der Steckeranschluß 27 am Hilfsmodul 13 ergeben zusammen eine Steckverbindung 28, welche die Modulbauweise erleichtert. In dem Gehäusemodul 12 sind im Bereich des Buchsenanschlusses 26 ein Paar von zweiten Öffnungen 29, 31 ausgebildet, welche in die Grundfläche 25 öffnen und die voneinander im Abstand liegen. Die stromaufwärts liegende zweite Öffnung 29 hat mit dem Zulauf 18 Verbindung, während die stromabwärts liegende zweite Öffnung 31 mit der schmutzseitigen Öffnung 16 in der Montagefläche 14 in Verbindung steht. Die auf der Reinseite gelegene erste Öffnung 15, die im Bereich der Befestigung mit Hilfe der zentral liegenden Hohlschraube liegt, steht mit dem Ablauf 22 in Verbindung.

Wie die Figur 1 ferner zeigt, weist der als Abschlußdeckel ausgebildete Hilfsmodul 13 zur Bildung des Steckeranschlusses 27 einen zylindrischen Sockel 32 auf, an dem außen eine ringförmig umlaufende Lippe 33 ausgebildet ist. Die Lippe 33 greift bei eingebautem Hilfsmodul 13 in eine Ringnut 34, welche in die Wand der Aufnahmebohrung 24 eingearbeitet ist. Auf diese Weise verhaken sich beide Module 12 und 13, wenn sie mit ihrem Buchsenanschluß 26 und Steckeranschluß 27 ineinandergesteckt werden. Dieser Sachverhalt ist besonders deutlich in Figur 3 zu erkennen, die als Einzelheit diese Steckverbindung 28 in vergrößertem Maßstab zeigt. Wie ferner aus Figur 1 in Verbindung mit Figur 3 hervorgeht, verläuft im zylindrischen Sockel 32 ein zur Stirnseite hin offener Querkanal 35, der bei im Gehäusemodul 12 eingebautem Hilfsmodul 13 die beiden zweiten Öffnungen 29 und 31 fluidisch miteinander verbindet. Zwischen dem Gehäusemodul 12 und dem Hilfsmodul 13 ist eine Flachdichtung 36 eingebaut, um eine sichere Trennung von Zu- und Ablaufseite zu gewährleisten.

Wie Figur 1 in Verbindung mit Figur 2 näher zeigen, ist an dem Gehäusemodul 12 ein Flansch 37 mit Langlöchern angeformt, mit dem die Filterdeckeleinrichtung 10 zusammen mit dem Flüssigkeitsfilter 11 an einem nicht näher gezeichneten Maschinenbauteil bzw. im Fahrzeug befestigt werden kann. Ferner sind die Anschlußstutzen für Zulauf 18 und Ablauf 22 als Gewindebohrungen ausgebildet, so daß die Kraftstoffleitungen im Fahrzeug angeschlossen werden können.

Der Zusammenbau der Filterdeckeleinrichtung 10 gestaltet sich sehr einfach durch die Modulbauweise. Nach dem Einlegen einer Flachdichtung 36 in den Buchsenanschluß 26 am Gehäusemodul 12 wird der als Abschlußdeckel ausgebildete Hilfsmodul 13 mit seinem Steckeranschluß 27 eingeklipst und dabei sandwichartig über dem Gehäusemodul 12 angeordnet.

Beim Betrieb der Filterdeckeleinrichtung 10 fließt das zu reinigende Druckmittel, insbesondere Kraftstoff, dem Gehäusemodul 12 am Zulauf 18 zu. Anschließend strömt es über die stromaufwärts liegende zweite Öffnung 29 in den Hilfsmodul 13 und strömt über den Querkanal 35 im Abschlußdeckel 13 zur stromabwärts liegenden zweiten Öffnung 31 des Hauptmoduls 12. Im Gehäusemodul 12 strömt das Druckmittel von der zweiten Öffnung 31 im wesentlichen in axialer Richtung zu der schmutzseitig gelegenen ersten Öffnung 16 und gelangt von dort über nicht näher gezeichnete Öffnungen in das Innere des Flüssigkeitsfilters 11. Das im Flüssigkeitsfilter 11 gereinigte Druckmittel strömt auf der Reinseite über die erste Öffnung 15 in den Gehäusemodul 12 hinein und wird dort zum Ablauf 22 geleitet. Der Abschlußdeckel 13 übernimmt somit hiermit lediglich eine Umlenkfunktion für das die Filterdeckeleinrichtung 10 durchströmende Druckmittel.

In der Figur 4 ist der als Abschlußdeckel ausgebildete erste Hilfsmodul 13 im Längsschnitt für sich allein dargestellt, wobei besonders dessen Steckeranschluß 27 mit der angeformten Lippe 33 gut erkennbar sind, ebenso der in ihm verlaufende Querkanal 35.

Die Figur 5 zeigt in vereinfachter Darstellung einen Längsschnitt durch einen zweiten Hilfsmodul 40, der hier als Handpumpe ausgebildet ist. Der prinzipielle Aufbau und die Funktion solcher Handpumpen sind an sich bekannt, zum Beispiel aus der DE-33 27 437 C2, so daß darauf nicht näher eingegangen wird.

Der Handpumpen-Modul 40 weist wie der erste Hilfsmodul 13 den gleichen Steckeranschluß 27 mit zugehöriger Lippe 33 auf, so daß er z.B. anstelle des Abschlußdeckels 13 in den Gehäusemodul 12 eingeklipst werden kann.

Die Figur 6 zeigt einen Längsschnitt durch einen dritten Hilfsmodul 41, der hier in stark vereinfachter und schematisierter Form als Kraftstoffrückführung ausgebildet ist. Solche Kraftstoffrückführungen, bei denen die von einer Einspritzpumpe kommende Überströmmenge temperaturabhängig zum Filter oder zum Tank zurückgeführt wird, sind an sich bekannt, zum Beispiel aus der DE 34 22 979 A1, so daß darauf nicht näher eingegangen wird. Der dritte Hilfsmodul 41 weist wie die anderen Hilfsmodule 13 und 40 einen gleichgroßen Steckeranschluß 27 auf, der ebenfalls mit einer ringförmig umlaufenden Lippe 33 versehen ist. Zusätzlich ist in dem als Kraftstoffrückführung ausgebildeten dritten Hilfsmodul 41 ein Buchsenanschluß 26 ausgebildet, in den jeder Steckeranschluß 27 eines Hilfsmoduls eingeklipst werden kann. Der Steckeranschluß 27 und der Buchsenanschluß 26, die auf entgegengesetzten Stirnseiten des dritten Hilfsmoduls 41 ausgebildet sind, sind durch zwei axiale Bohrungen 42, 43 miteinander verbunden. Dabei verläuft in die rechte Bohrung 43, welche im Betrieb mit der zweiten Öffnung 31 im Gehäusemodul 12 Verbindung hat, eine Schrägbohrung 44, über welche von der Kraftstoffrückführung kommendes Druckmittel in Richtung Schmutzseite des Flüssigkeitsfilters 11 geführt wird. Die andere Bohrung 42 ist so angeordnet, daß sie mit der zweiten Öffnung 29 Verbindung hat. Der dritte Hilfsmodul 41 stellt somit ein Bauelement dar, das sandwichartig zwischen zwei anderen Modulbausteinen eingebaut werden kann.

Die Figur 7 zeigt einen Längsschnitt durch einen vierten Hilfsmodul 46, der in stark vereinfachter Form als elektrische Heizung ausgebildet ist. Derartige elektrische Heizungen sind an sich bekannt, zum Beispiel aus der EP 0 400 223 A1, so daß darauf nicht näher eingegangen wird. Der vierte Hilfsmodul 46 weist wie der dritte Hilfsmodul 41 einen Steckeranschluß 27 sowie einen entgegengesetzt liegenden Buchsenanschluß 26 auf. In vergleichbarer Weise wie beim dritten Hilfsmodul 41 weist der Heizungsmodul 46 Bohrungen 42 und 43 auf, wobei sich die Bohrung 43 zu einer Kammer 47 erweitert, in der ein elektrisches Heizelement 48 angeordnet ist. Der vierte Hilfsmodul 46 kann wie der dritte Hilfsmodul 41 als Zwischenmodul eingesetzt werden.

Die Figur 8 zeigt einen Längsschnitt durch die Flachdichtung 36, wie sie in der Steckverbindung 28 verwendet wird. Dabei sind die den zweiten Öffnungen 29, 31 im Gehäusemodul 12 zugeordneten Öffnungen 49 deutlicher erkennbar. Um die Flächenpressung und damit die Dichtwirkung zu erhöhen, ist um die Bohrungen 42 und 43 bzw. die entsprechenden Kanäle in den Hilfsmodulen 13, 40, 41, 46 jeweils ein umlaufender Wulst 51 angeordnet, wie dies in der Einzelheit nach Figur 9 in vergrößertem Maßstab dargestellt ist.

Die Figur 10 zeigt einen Längsschnitt durch eine Gummidichtung 52, wie sie anstelle der Flachdichtung 36 nach Figur 8 verwendbar ist, wobei dann der gehäusefeste Wulst 51 an den Hilfsmodulen entfallen kann. Die Gummidichtung 52 ermöglicht einen größeren Federweg zwischen den Modulbausteinen und ermöglicht eine vollkommen eben ausgebildete Stirnseite am Steckeranschluß 27.

Die Figur 11 zeigt einen Längsschnitt durch eine zweite Filterdeckeleinrichtung 60, die sich von der ersten Filterdeckeleinrichtung 10 nach Figur 1 wie folgt unterscheidet, wobei für gleiche Bauelemente gleiche Bezugszeichen verwendet werden. Bei der zweiten Filterdeckeleinrichtung 60 ist zwischen dem Gehäusemodul 12 und dem ersten Hilfsmodul 13 der als Heizung ausgebildete vierte Hilfsmodul 46 eingebaut. Durch die Modulbauweise ist somit in kompakter und kostengünstiger sowie einfacher Form die Funktion der elektrischen Heizung in die Deckeleinrichtung integrierbar.

Die Figur 12 zeigt eine dritte Filterdeckeleinrichtung 61, die sich von der zweiten (60) nach Figur 11 lediglich dadurch unterscheidet, daß anstelle des als Abschlußdeckel ausgebildeten ersten Hilfsmoduls 13 der als Handpumpe ausgebildete zweite Hilfsmodul 40 in den Heizungsmodul 46 eingeklipst ist. Auf diese Weise können die beiden Funktionen elektrische Heizung und Handpumpe in der Filterdeckeleinrichtung 61 kombiniert werden.

Mit der aufgezeigten Modulbauweise bei Filterdeckeleinrichtungen erhält man ein sehr flexibles System, das es erlaubt, je nach Kundenwunsch Heizung, Kraftstoffrückführung und Handpumpe in beliebiger Kombination miteinander zu verwenden.

Selbstverständlich sind an der aufgezeigten Modulbauweise Änderungen möglich, ohne vom Gedanken der Erfindung abzuweichen. Über die aufgezeigten Module wie Abschlußdeckel, Handpumpe, Kraftstoffrückführung und Heizung können selbstverständlich auch zusätzliche Module für weitere Funktionen verwendet werden. Ferner läßt sich auch an gesonderten oder an den aufgezeigten Hilfsmodulen in der Regel ein einzelner Abzweiganschluß vorsehen, um z.B. eine Flammstartanlage oder eine Standheizung zu betreiben. Obwohl die Schnappverbindung mit Hilfe der Lippe 33 und der Ringnut 34 besonders vorteilhaft ist, kann natürlich auch eine andere geeignete Befestigungsart zwischen dem Gehäusemodul 12 und den Hilfsmodulen verwendet werden. So können zum Beispiel auch geeignete Schraubverbindungen verwendet werden. Anstelle des gezeigten Flüssigkeitsfilters 11 mit einer zentralen Hohlschraubenverbindung können auch andere Filterbauarten verwendet und in geeigneter Weise am Gehäusemodul 12 befestigt werden. Auch bei der Ausbildung der Abdichtung zwischen den Modulen sind Änderungen möglich, ohne vom Gedanken der Erfindung abzuweichen. Ferner ist es möglich am Gehäusemodul 12 mit Hilfe der Blindstutzen die Anschlußarten zu variieren. Auch läßt sich der Gehäusemodul so ausbilden, daß er nur zwei Anschlußstutzen aufweist, die insbesondere koaxial zueinander liegen. Außerdem kann es zweckmäßig sein, die Drehlage der zweiten Öffnungen 29, 31 im Gehäusemodul und der zugeordneten Öffnungen bzw. Kanäle in den Hilfsmodulen zu verändern.

## Patentansprüche

1. Filterdeckeleinrichtung in Modulbauweise, mit einem Gehäusemodul (12) und einem anbaubaren Hilfsmodul (13, 40, 41, 46), die sich zum Anbau eines Flüssigkeitsfilters (11) an dem Gehäusemodul (12) eignet, an dem ein Zulauf (18) und ein Ablauf (22) angeordnet sind und der eine zum Anbau des Flüssigkeitsfilters (11) geeignete Montagefläche (14) aufweist, wobei die Montagefläche (14) ein Paar von ersten Öffnungen (15, 16) zum fluidischen Anschließen des Flüssigkeitsfilters (11) aufweist und mit einer von der Montagefläche (14) getrennten Anbaufläche (23) mit einem Paar von zweiten Öffnungen (29, 31) zum Anbau des fluiddurchströmten Hilfsmoduls (13, 40, 41, 46) an dem Gehäusemodul (12), wobei das Flüssigkeitsfilter (11) und der Hilfsmodul (13, 40, 41, 46) hintereinander in den vom Zulauf (18) zum Ablauf (22) geführten Fluidstrom schaltbar sind, dadurch gekennzeichnet, daß der Gehäusemodul (12) die Form einer Ringscheibe aufweist, deren Durchmesser ein Mehrfaches ihrer axialen Dicke beträgt und an deren Außenumfang der Zulauf (18) und der Ablauf (22) in der gleichen radialen Ebene angeordnet sind, daß die Anbaufläche (23) auf der zur Montagefläche (14) entgegengesetzten Stirnseite der Ringscheibe ausgebildet ist und daß die zweiten Öffnungen (29, 31) zum Anschließen des Hilfsmoduls (13, 40, 41, 46) stromaufwärts vom Flüssigkeitsfilter (11) in den Fluidstrom schaltbar sind.

2. Filterdeckeleinrichtung in Modulbauweise nach Anspruch 1, dadurch gekennzeichnet, daß der Gehäusemodul (12) an seiner Anbaufläche (23) eine zum Anbau des Hilfsmoduls (13, 40, 41, 46) dienende zentral liegende Aufnahmebohrung (24) aufweist und daß an deren Grundfläche (25) das Paar von zweiten Öffnungen (29, 31) angeordnet ist, um einen Buchsenanschluß (26) am Gehäusemodul (12) zu bilden.

3. Filterdeckeleinrichtung in Modulbauweise nach Anspruch 1 oder 2, dadurch gekennzeichnet, daß an jedem Hilfsmodul (13, 40, 41, 46) durch einen scheibenförmigen, Druckmittelkanäle (42, 43, 35) aufweisenden Sockel (32) ein Steckeranschluß (27) ausgebildet ist, der sich mit jedem Buchsenanschluß (26) eines anderen Modulbausteins (12, 41, 46) zu einer Steckverbindung (28) vereinigen läßt.

4. Filterdeckeleinrichtung in Modulbauweise nach Anspruch 2 oder 3, dadurch gekennzeichnet, daß die Aufnahmebohrung (24) in ihrer Mantelfläche eine Ringnut (34) hat und der Hilfsmodul (13, 40, 41, 46) eine dazu passende ringförmige Lippe (33) aufweist, die miteinander eine Schnappverbindung (28) bilden.

5. Filterdeckeleinrichtung in Modulbauweise nach einem der Ansprüche 1 bis 4, dadurch gekennzeichnet, daß das Flüssigkeitsfilter (11) und der Hilfsmodul (13, 40, 41, 46) koaxial am Gehäusemodul (12) angeordnet sind.

6. Filterdeckeleinrichtung in Modulbauweise nach einem der Ansprüche 2 bis 5, dadurch gekennzeichnet, daß am Hilfsmodul (41, 46) auf der dem Steckeranschluß (27) gegenüberliegenden Stirnseite ein Buchsenanschluß (26) ausgebildet ist, so daß der Hilfsmodul als Zwischenmodul (41, 46) verwendbar ist.

7. Filterdeckeleinrichtung in Modulbauweise nach einem der Ansprüche 1 bis 6, dadurch gekennzeichnet, daß am Gehäusemodul (12) Befestigungsmittel (18, 22, 37) für die Fluid-Anschlußleitungen sowie für dessen Befestigung an einem Maschinenteil angeordnet sind.

8. Filterdeckeleinrichtung in Modulbauweise nach einem oder mehreren der Ansprüche 1 bis 7, dadurch gekennzeichnet, daß der Hilfsmodul als Abschlußdeckel (13) ausgebildet ist, der einen die beiden zweiten Öffnungen (29, 31) des Gehäusemoduls (12) verbindenden Querkanal (35) aufweist.

9. Filterdeckeleinrichtung in Modulbauweise nach einem oder mehreren der Ansprüche 1 bis 7, dadurch gekennzeichnet, daß der Hilfsmodul als Handpumpe (40) ausgebildet ist.

10. Filterdeckeleinrichtung in Modulbauweise nach einem oder mehreren der Ansprüche 1 bis 7, dadurch gekennzeichnet, daß der Hilfsmodul als eine insbesondere elektrische Heizeinrichtung (46) für das durchströmende Fluid ausgebildet ist.

11. Filterdeckeleinrichtung in Modulbauweise nach einem oder mehreren der Ansprüche 1 bis 7, dadurch gekennzeichnet, daß der Hilfsmodul als eine Kraftstoff-Rückführungseinrichtung (41) ausgebildet ist.

12. Filterdeckeleinrichtung in Modulbauweise nach einem oder mehreren der Ansprüche 1 bis 10, dadurch gekennzeichnet, daß am Gehäusemodul (12) mehrere Hilfsmodule (46, 13; 46, 40) sandwichartig angeordnet sind.

13. Filterdeckeleinrichtung in Modulbauweise nach einem der Ansprüche 6, 10 bis 12, dadurch gekennzeichnet, daß an den entgegengesetzten Stirnseiten des Hilfsmoduls der Buchsenanschluß (26) und der Steckeranschluß (27) als Teile einer für alle Modulbausteine gemeinsamen Steckverbindung (28) ausgebildet sind und daß zwischen Buchsenanschluß (26) und Steckeranschluß (27) wenigstens zwei Druckmittelverbindungen (42, 43) verlaufen.

## Claims

1. Filter-cover device of modular design, with a housing module (12) and with a mountable auxiliary module (13, 40, 41, 46), the said filter-cover device being suitable for mounting a liquid filter (11) on the housing module (12), on which an inflow (18) and an outflow (22) are arranged and which has an assembly surface (14) suitable for mounting the liquid filter (11), the assembly surface (14) having a pair of first orifices (15, 16) for the fluidic connection of the liquid filter (11), and with a mounting surface (23) separate from the assembly surface (14) and having a pair of second orifices (29, 31) for mounting the auxiliary module (13, 40, 41, 46) having fluid throughflow on the housing module (12), the liquid filter (11) and the auxiliary module (13, 40, 41, 46) being capable of being switched successively into the fluid stream conducted from the inflow (18) to the outflow (22), characterized in that the housing module (12) has the form of an annular disc, the diameter of which is a multiple of its axial thickness and on the outer circumference of which the inflow (18) and the outflow (22) are arranged in the same radial plane, in that the mounting surface (23) is designed on that end face of the annular disc which is opposite to the assembly surface (14), and in that, in order to connect the auxiliary module (13, 40, 41, 46), the second orifices (29, 31) can be switched into the fluid stream upstream of the liquid filter (11).

2. Filter-cover device of modular design according to Claim 1, characterized in that the housing module (12) has, on its mounting surface (23), a centrally arranged receiving bore (24) serving for mounting the auxiliary module (13, 40, 41, 46), and in that the pair of second orifices (29, 31) is arranged on the bottom surface (25) of the said receiving bore, in order to form a sleeve connection (26) on the housing module (12).

3. Filter-cover device of modular design according to Claim 1 or 2, characterized in that a plug connection (27) is designed on each auxiliary module (13, 40, 41, 46) by means of a disc-shaped socket (32) having pressure-medium ducts (42, 43, 35) and can be combined with any sleeve connection (26) of another modular building block (12, 41, 46) to form a plug junction (28).

4. Filter-cover device of modular design according to Claim 2 or 3, characterized in that the receiving bore (24) has an annular groove (34) in its generated surface, and the auxiliary module (13, 40, 41, 46) has an annular lip (33) which fits the said annular groove, the latter and the lip forming with one another a snap connection (28).

5. Filter-cover device of modular design according to one of Claims 1 to 4, characterized in that the liquid filter (11) and the auxiliary module (13, 40, 41, 46) are arranged coaxially on the housing module (12).

6. Filter-cover device of modular design according to one of Claims 2 to 5, characterized in that a sleeve connection (26) is designed on the auxiliary module (41, 46) of the end face located opposite the plug connection (27), so that the auxiliary module can be used as an intermediate module (41, 46).

7. Filter-cover device of modular design according to one of Claims 1 to 6, characterized in that there are arranged on the housing module (12) fastening means (18, 22, 37) for the fluid-connecting conduits and for fastening the said housing module to a machine part.

8. Filter-cover device of modular design according to one or more of Claims 1 to 7, characterized in that the auxiliary module is designed as a closing cover (13) which has a transverse duct (35) connecting the two second orifices (29, 31) of the housing module (12).

9. Filter-cover device of modular design according to one or more of Claims 1 to 7, characterized in that the auxiliary module is designed as a hand pump (40).

10. Filter-cover device of modular design according to one or more of Claims 1 to 7, characterized in that the auxiliary module is designed as an especially electrical heating device (46) for the fluid flowing through.

11. Filter-cover device of modular design according to one or more of Claims 1 to 7, characterized in that the auxiliary module is designed as a fuel return device (41).

12. Filter-cover device of modular design according to one or more of Claims 1 to 10, characterized in that a plurality of auxiliary modules (46, 13; 46, 40) are arranged in a sandwich-like manner on the housing module (12).

13. Filter-cover device of modular design according to one of Claims 6, 10 to 12, characterized in that, on the opposite end faces of the auxiliary module, the sleeve connection (26) and the plug connection (27) are designed as parts of a plug junction (28) common to all modular building blocks, and in that at least two pressure-medium connections (42, 43) run between the sleeve connection (26) and the plug connection (27).

## Revendications

1. Installation de couvercle de filtre à construction modulaire comprenant un module de boîtier (12) et un module auxiliaire (13, 40, 41, 46) susceptible d'être monté sur celui-ci, et qui convient pour le montage d'un filtre à liquide (11) sur le module de boîtier (12), avec une arrivée (18) et une sortie (22) et ayant une surface de montage (14) convenant pour le montage du filtre à liquide (11), la surface de montage (14) ayant une paire de premières ouvertures (15, 16) pour le branchement du filtre à liquide (11) et une surface de montage (23) séparée de la surface de montage (14) avec une paire de secondes ouvertures (29, 31) pour le montage du module auxiliaire (13, 40, 41, 46) traversé par le liquide sur le module de boîtier (12), le filtre à liquide (11) et le module auxiliaire (13, 40, 41, 46) étant branchés l'un derrière l'autre dans le courant de fluide passant de l'arrivée (18) à la sortie (22),
caractérisée en ce que
le module de boîtier (12) a la forme d'un disque annulaire dont le diamètre représente un multiple de son épaisseur axiale et dont la périphérie extérieure est munie de l'arrivée (18) et de la sortie (22) dans le même plan radial, la surface de montage (23) étant réalisée sur la face frontale du disque annulaire, opposée à la surface de montage (14) et les secondes ouvertures (29, 31) sont branchées en amont du filtre à liquide (11) dans le courant de fluide pour le raccordement du module auxiliaire (13, 40, 41, 46).

2. Installation de couvercle de filtre en construction modulaire selon la revendication 1,
caractérisée en ce que
le module de boîtier (12) comporte, au niveau de sa surface de montage (23), un perçage de réception (24) central servant au montage du module auxiliaire (13, 40, 41, 46) et en ce que sa surface de base (25) comporte une paire de secondes ouvertures (29, 31) pour former un branchement (26) sur le module de boîtier (12).

3. Installation de couvercle de filtre en construction modulaire selon la revendication 1 ou 2,
caractérisée en ce qu'
à chaque module auxiliaire (13, 40, 41, 46), il est réalisé un branchement de connecteur (27) par un socle (32) en forme de disque comportant des canaux de fluide sous pression (42, 43, 35), ce branchement se combinant avec n'importe quel branchement de douille (26) d'un autre composant modulaire (12, 41, 46) pour former une liaison par enfichage (28).

4. Installation de couvercle de filtre en construction modulaire selon la revendication 2 ou 3,
caractérisée en ce que
le perçage de réception (24) présente, dans sa surface enveloppe, une rainure annulaire (34) et le module auxiliaire (13, 40, 41, 46) comporte une lèvre (33) annulaire adaptée à cette rainure, et ces deux moyens forment une liaison par enclipsage (28).

5. Installation de couvercle de filtre en construction modulaire selon l'une des revendications 1 à 4,
caractérisée en ce que
le filtre à liquide (11) et le module auxiliaire (13, 40, 41, 46) sont montés coaxialement sur le module de boîtier (12).

6. Installation de couvercle de filtre en construction modulaire selon l'une des revendications 2 à 5,
caractérisée en ce que
le module auxiliaire (41, 46) comporte, sur la face frontale opposée au branchement de connecteur (27), un branchement de douille (26) pour que le module auxiliaire puisse s'utiliser comme module intermédiaire (41, 46).

7. Installation de couvercle de filtre en construction modulaire selon l'une des revendications 1 à 6,
caractérisée en ce que
le module de boîtier (12) comporte des moyens de fixation (18, 22, 37) pour les branchements de fluide ainsi que pour leur fixation sur une partie de machine.

8. Installation de couvercle de filtre en construction modulaire selon l'une des revendications 1 à 7,
caractérisée en ce que
le module auxiliaire est en forme de couvercle de fermeture (13) qui comporte un canal transversal (35) reliant l'une des secondes ouvertures (29, 31) du module de boîtier (12).

9. Installation de couvercle de filtre en construction modulaire selon l'une des revendications 1 à 7,
caractérisée en ce que
le module auxiliaire est en forme de pompe manuelle (40).

10. Installation de couvercle de filtre en construction modulaire selon l'une des revendications 1 à 7,
caractérisée en ce que
le module auxiliaire est réalisé comme installation de chauffage notamment électrique (46) pour le fluide qui le traverse.

11. Installation de couvercle de filtre en construction modulaire selon l'une des revendications 1 à 7,
caractérisée en ce que
le module auxiliaire est en forme d'installation de retour de carburant (41).

12. Installation de couvercle de filtre en construction modulaire selon l'une des revendications 1 à 10,
caractérisée en ce que
le module de boîtier (12) reçoit, en un montage en sandwich, plusieurs modules auxiliaires (46, 13 ; 46, 40).

13. Installation de couvercle de filtre en construction modulaire selon l'une des revendications 6, 10 à 12,
caractérisée en ce que
les faces frontales opposées du module auxiliaire, le branchement de douille (26) et le branchement de connecteur (27) font partie d'une liaison d'enfichage (28) commune à tous les composants modulaires et en ce qu'entre le branchement de douille (26) et le branchement de connecteur 27 il y a au moins deux conduites de liquide sous pression (42, 43).
